# EUROPÄISCHE PATENTANMELDUNG

(11) **EP 2 709 237 A1**
(43) Veröffentlichungstag der Anmeldung: **19.03.2014**
(21) Anmeldenummer: 12184238.9
(22) Anmeldetag: 13.09.2012
(51) Int. Cl.: H02K 1/02, H02K 1/12, H02K 9/22

(54) **Einrichtung mit elektrischer Maschine in Leichtbauweise**

(71) Anmelder: Siemens Aktiengesellschaft, 80333 München (DE)
(72) Erfinder: Ballauf, Christian, 80638 München (DE); Jajtic, Zeljko, 80992 München (DE); Johannes, Martin, 91052 Erlangen (DE); Seidel, Christian, 90571 Schwaig (DE)

(57) **Zusammenfassung**

Eine Einrichtung weist einen Grundkörper (1) auf. Ein Statorpaket (4) einer elektrischen Maschine (2) ist über eine Verbindungsstruktur (5) mit dem Grundkörper (1) verbunden. Die elektrische Maschine (2) weist einen Rotor (6) auf, der mit dem Statorpaket (4) elektromagnetisch zusammenwirkt und relativ zum Statorpaket (4) drehbar gelagert ist, so dass der Rotor (6) um eine Rotationsachse (7) rotierbar ist. Das Statorpaket (4) ist mittels der Verbindungsstruktur (5) relativ zum Grundkörper (1) fixiert. Das Statorpaket (4) weist eine Anzahl von Statorblechen (9) auf, die in Richtung der Rotationsachse (7) gesehen aufeinander gestapelt sind. Zumindest zwischen einigen der Statorbleche (9) sind elektromagnetisch inaktive erste Zwischenschichten (10) angeordnet. Die ersten Zwischenschichten (10) sind Bestandteile der Verbindungsstruktur (5). Über sie wird ein vom Statorpaket (4) auf den Rotor (6) ausgeübtes Drehmoment in die Verbindungsstruktur (5) eingeleitet.

## Beschreibung

Die vorliegende Erfindung betrifft eine Einrichtung,
- wobei die Einrichtung einen Grundkörper aufweist,
- wobei ein Statorpaket einer elektrischen Maschine über eine Verbindungsstruktur mit dem Grundkörper verbunden ist,
- wobei die elektrische Maschine einen Rotor aufweist, der mit dem Statorpaket elektromagnetisch zusammenwirkt und relativ zum Statorpaket drehbar gelagert ist, so dass der Rotor um eine Rotationsachse rotierbar ist,
- wobei das Statorpaket mittels der Verbindungsstruktur relativ zum Grundkörper fixiert ist,
- wobei das Statorpaket eine Anzahl von Statorblechen aufweist, die in Richtung der Rotationsachse gesehen aufeinander gestapelt sind.

Derartige Einrichtungen sind allgemein bekannt. Insbesondere ist nahezu jeder übliche Elektromotor, der ein Gehäuse aufweist oder in eine größere Einrichtung eingebaut ist, derart aufgebaut.

Im Rahmen von mobilen Anwendungen spielt das Leistungsgewicht von Elektromotoren eine große Rolle. Insbesondere wird versucht, das Gewicht der Elektromotoren so weit wie möglich zu reduzieren. Gewichtseinsparungen werden sowohl bei den sogenannten Aktivteilen (d.h. den elektromagnetisch aktiven Komponenten, also Magneten und Wicklungen sowie Blechen bzw. Blechpaketen) als auch bei den übrigen Komponenten, den sogenannten Passivteilen, angestrebt.

Im Stand der Technik wird in der Regel versucht, die einzelnen Komponenten der Systeme zu optimieren. Ein besonders großes Potenzial liegt jedoch im integrativen Leichtbau, beispielsweise durch strukturelle und funktionelle Integration von Aktiv- und Passivteilen.

Die Aufgabe der vorliegenden Erfindung besteht darin, eine Einrichtung mit einer elektrischen Maschine in Leichtbauweise zu schaffen, bei welcher ein derartiger integrativer Leichtbau realisiert ist.

Die Aufgabe wird durch eine Einrichtung mit den Merkmalen des Anspruchs 1 gelöst. Vorteilhafte Ausgestaltungen der erfindungsgemäßen Einrichtung sind Gegenstand der abhängigen Ansprüche 2 bis 18.

Erfindungsgemäß wird zur Lösung der Aufgabe eine Einrichtung der eingangs genannten Art dadurch weiter entwickelt,
- dass zumindest zwischen einigen der Statorbleche elektromagnetisch inaktive erste Zwischenschichten angeordnet sind und
- dass die ersten Zwischenschichten Bestandteile der Verbindungsstruktur sind und
- dass über die ersten Zwischenschichten ein vom Statorpaket auf den Rotor ausgeübtes Drehmoment in die Verbindungsstruktur eingeleitet wird.

Durch die ersten Zwischenschichten verringert sich das Gewicht der elektrischen Maschine gegenüber einer konventionellen elektrischen Maschine gleicher Baugröße beträchtlich. Die mittels der erfindungsgemäßen elektrischen Maschine abgebbare Spitzenleistung, die durch die magnetische Sättigung der Statorbleche begrenzt ist, ist zwar geringer als bei der vergleichbaren konventionellen Maschine. Die Dauerleistung der erfindungsgemäßen elektrischen Maschine, die durch die aus dem Statorpaket abführbare Wärme begrenzt ist, ist jedoch nahe zu ebenso groß wie bei der konventionellen elektrischen Maschine.

Es ist möglich, dass zwischen allen Statorblechen jeweils eine erste Zwischenschicht angeordnet ist. Alternativ ist es möglich, dass die ersten Zwischenschichten nur zwischen einigen der Statorbleche angeordnet sind. In diesem Fall sind vorzugsweise zwischen denjenigen Statorblechen, zwischen denen keine erste Zwischenschicht angeordnet ist, elektromagnetisch inaktive zweite Zwischenschichten angeordnet. Die zweiten Zwischenschichten sind nicht Bestandteil der Verbindungsstruktur. Der Zuschnitt der zweiten Zwischenschichten entspricht bei dieser Ausgestaltung in der Regel dem Zuschnitt der Statorbleche. Sie weisen also die gleiche Kontur auf wie die Statorbleche.

Im Falle des Vorhandenseins der zweiten Zwischenschichten ist zwischen je zwei ersten Zwischenschichten eine vorbestimmte Anzahl zweiter Zwischenschichten angeordnet, wobei die Anzahl an zweiten Zwischenschichten in der Regel stets die gleiche ist. Es ist möglich, dass zwischen je zwei ersten Zwischenschichten jeweils eine einzige zweite Zwischenschicht angeordnet ist. Vorzugsweise folgen in Richtung der Rotationsachse gesehen auf die ersten Zwischenschichten jedoch jeweils mehrere zweite Zwischenschichten.

Das Material der ersten Zwischenschichten kann nach Bedarf bestimmt sein. Vorzugsweise bestehen die ersten Zwischenschichten aus einem Faserverbundwerkstoff, beispielsweise aus einem kohlefaserverstärkten Kunststoff (CFK) oder aus einem glasfaserverstärkten Kunststoff (GFK). Analoges gilt - sofern vorhanden - für die zweiten Zwischenschichten.

Es ist möglich, dass die ersten Zwischenschichten ausschließlich der Fixierung des Statorpakets dienen, also ausschließlich die mechanische Tragfunktion des Statorpakets implementieren. Vorzugsweise nehmen die ersten Zwischenschichten jedoch zusätzlich eine Wärmeleitfunktion wahr. Zu diesem Zweck kann insbesondere vorgesehen sein, dass die ersten Zwischenschichten aus einem Material bestehen, das eine Vorzugswärmeleitrichtung aufweist. Derartige Materialien - insbesondere kohlefaserverstärkte Kunststoffe - sind Fachleuten bekannt. Im Falle eines derartigen Materials ist die Vorzugswärmeleitrichtung vorzugsweise innerhalb des Statorpakets radial oder tangential zur Rotationsachse und außerhalb des Statorpakets vom Statorpaket weg orientiert.

Es ist möglich, dass auf der Verbindungsstruktur wärmeabführende Elemente wie Kühlrippen oder dergleichen angeordnet sind.

Vorzugsweise ist vorgesehen, dass die Verbindungsstruktur eine Anzahl von Teilstrukturen aufweist, dass die Teilstrukturen jeweils eine Mittelschicht aufweisen, die keine der ersten Zwischenschichten enthält, und dass die Mittelschichten in Richtung der Rotationsachse gesehen auf beiden Seiten jeweils von einer Gruppe von ersten Zwischenschichten begrenzt sind. Durch diese Ausgestaltung ergibt sich auf besonders einfache Weise eine sehr stabile und belastbare Verbindungsstruktur.

Die Anzahl an ersten Zwischenschichten pro Gruppe von ersten Zwischenschichten kann nach Bedarf sein. Es ist möglich, dass die entsprechende Anzahl gleich eins ist. Dies kann insbesondere dann sinnvoll sein, wenn die zweiten Zwischenschichten vorhanden sind. Alternativ ist es möglich, dass die entsprechende Anzahl größer als eins ist, beispielsweise drei bis sechs. Dies kann insbesondere dann sinnvoll sein, wenn keine zweiten Zwischenschichten vorhanden sind, also zwischen allen Statorblechen jeweils eine erste Zwischenschicht angeordnet ist.

Die Mittelschichten können nach Bedarf ausgebildet sein. Beispielsweise ist es möglich, dass die Mittelschichten aus einem Strukturschaum bestehen. Alternativ können die Mittelschichten aus einer Sandwichstruktur bestehen. In diesem Fall weist die Sandwichstruktur zwei Deckschichten und eine zwischen den Deckschichten angeordnete Wabenstruktur auf.

In der Regel weist die Verbindungsstruktur mindestens zwei derartige Teilstrukturen auf. Es ist möglich, dass eine einzige Gruppe von ersten Zwischenschichten gleichzeitig an die Mittelschicht beider Teilstrukturen angrenzt. Alternativ ist es möglich,dass die einander zugewandten Gruppen von ersten Zwischenschichten der Teilstrukturen in Richtung der Rotationsachse gesehen voneinander beabstandet sind. In diesem Fall können die zwei Teilstrukturen beispielsweise einen Hohlraum axial beidseitig begrenzen. In diesem Fall sind in den Teilstrukturen vorzugsweise Durchgangsöffnungen zum Einspeisen eines Kühlmediums in den Hohlraum und zum Ausspeisen des Kühlmediums aus dem Hohlraum angeordnet. Insbesondere bei dieser Ausgestaltung ist die Verbindungsstruktur tangential um die Rotationsachse herum gesehen oftmals vollflächig ausgebildet.

Alternativ ist es möglich, dass die Verbindungsstruktur eine Anzahl speichenartiger Verbindungsstreben aufweist, welche das Statorpaket mit dem Grundkörper verbinden. In diesem Fall sind die ersten Zwischenschichten Bestandteile der Verbindungsstreben.

In der Regel sind die Verbindungsstreben flach ausgebildet. In diesem Fall befinden sich erste Zwischenschichten zumindest auf der Oberseite und der Unterseite der (flachen) Verbindungsstreben.

Die Verbindungsstreben erstrecken sich vom Statorpaket zum Grundkörper in Richtung einer jeweiligen Hauptachse. In einer bevorzugten Ausgestaltung der vorliegenden Erfindung ist vorgesehen, dass die Verbindungsstreben um die jeweilige Hauptachse verdreht sind. Dadurch können die Verbindungsstreben als Führungselemente für Kühlluft dienen, welche der Verbindungsstruktur in Axialrichtung - d.h. in einer Richtung parallel zur Rotationsachse - zugeführt wird.

Alternativ ist es möglich, dass die Verbindungsstreben jeweils in einer zur Rotationsachse orthogonalen Radialebene verlaufen, dass die Verbindungsstreben um die Rotationsachse herum gesehen einen jeweiligen Winkelbereich überdecken, dass pro Radialebene die in der jeweiligen Radialebene verlaufenden Verbindungsstreben um die Rotationsachse herum gesehen nur einen Teil eines Vollkreises überdecken und dass bezüglich mindestens zweier Radialebenen die von den in der jeweiligen Radialebene verlaufenden Verbindungsstreben überdeckten Winkelbereiche voneinander verschieden sind.

Beispielsweise kann pro Radialebene eine Anzahl von Verbindungsstreben vorhanden sein, die jeweils einen bestimmten Winkelbereich überdecken. Die Verbindungsstreben sind innerhalb der jeweiligen Radialebene in der Regel gleichmäßig verteilt angeordnet. Die Verbindungsstreben der nächsten Radialebene können beispielsweise um einen Versatzwinkel gegenüber den Verbindungsstreben der erstgenannten Radialebene versetzt sein. Der Versatzwinkel ist vorzugsweise gleich dem oder geringfügig kleiner als der Winkelbereich. Das Ganze kann sich für die darauf folgende Radialebene wiederholen, so dass über mehrere Radialebenen gesehen nach und nach eine wendelartige Konfiguration erreicht wird. Durch eine derartige Ausgestaltung kann beispielsweise die Kühlwirkung eines der Verbindungsstruktur zugeführten Kühlluftstroms optimiert werden.

Alternativ ist es möglich, dass die Verbindungsstreben sich vom Statorpaket zum Grundkörper in Richtung einer jeweiligen Hauptachse erstrecken und dass die jeweilige Hauptachse zusätzlich zu einer Komponente radial zur Rotationsachse eine jeweilige Komponente axial zur Rotationsachse aufweist. Durch diese Ausgestaltung kann auf besonders einfache Weise eine besonders stabile Fixierung des Statorpakets relativ zum Grundkörper erreicht werden. Dies gilt ganz besonders, wenn die jeweilige Hauptachse zusätzlich eine jeweilige Komponente tangential zur Rotationsachse aufweist. Eine derartige speichenartige Struktur ist beispielsweise bei den Rädern von Fahrrädern und Motorrädern vom Ansatz her allgemein bekannt.

Die vorliegende Erfindung ist unabhängig davon realisierbar, ob der Rotor als Innenläufer oder als Außenläufer ausgebildet ist. Ihre vollen Vorteile zeigt die vorliegende Erfindung jedoch, wenn der Rotor als Außenläufer ausgebildet ist.

Die erfindungsgemäße Einrichtung kann im übrigen nach Bedarf ausgebildet sein. Besonders bevorzugt ist jedoch eine Anwendung im Bereich der Luftfahrt, wenn also der Grundkörper Bestandteil eines Luftfahrzeugs ist, insbesondere eines Hubschraubers.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Einrichtung mit einer elektrischen Maschine,
- FIG 2: einen Längsschnitt durch eine elektrische Maschine,
- FIG 3 und 4: jeweils ein Statorpaket und eine Verbindungsstruktur,
- FIG 5 und 6: jeweils eine Draufsicht auf eine erste Zwischenschicht,
- FIG 7 und 8: jeweils ein Statorpaket und eine Verbindungsstruktur,
- FIG 9: in abgerollter Darstellung eine Anordnung von Verbindungsstreben,
- FIG 10 und 11: jeweils ein Statorpaket und eine Verbindungsstruktur und
- FIG 12: eine Draufsicht auf ein Statorpaket und eine Verbindungsstruktur.

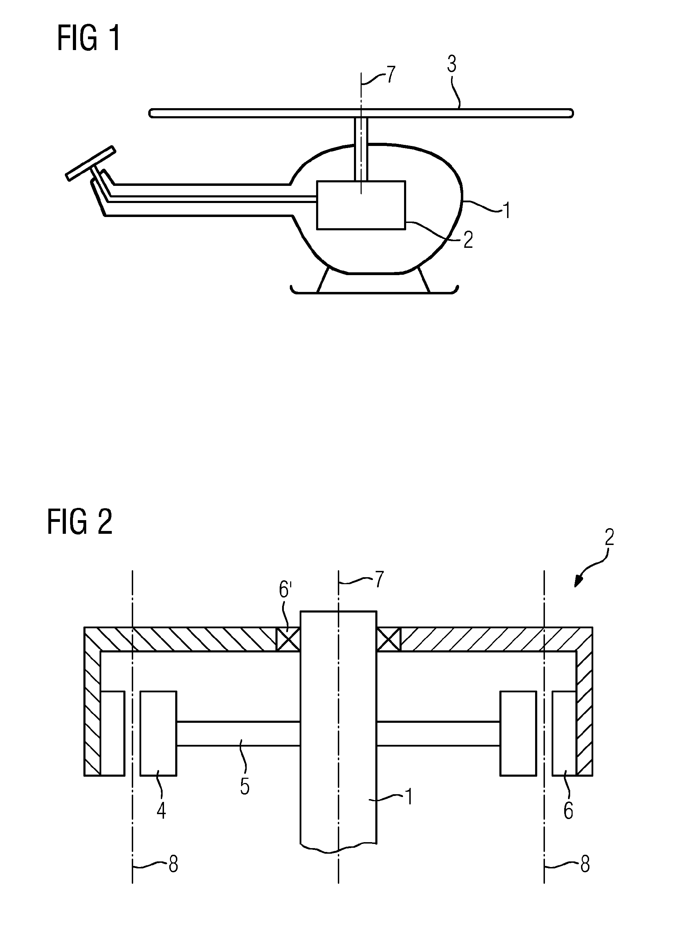

Gemäß Figur 1 weist eine - prinzipiell beliebige - Einrichtung einen Grundkörper 1 auf. Gemäß Figur 1 ist der Grundkörper 1 Bestandteil eines Luftfahrzeugs, nämlich eines Hubschraubers. Diese Darstellung ist jedoch rein beispielhaft. Prinzipiell könnte der Grundkörper 1 eine beliebige Gestalt aufweisen.

Im Grundkörper 1 ist eine elektrische Maschine 2 angeordnet. Die elektrische Maschine 2 treibt ein Aggregat 3 der Einrichtung an. Insbesondere kann die elektrische Maschine 2 als Hauptantrieb der Einrichtung ausgebildet sein. Im Falle eines Luftfahrzeugs ist das Aggregat 3 beispielsweise als Vor- und/oder Auftrieb generierende Luftschraube ausgebildet. Das Wort "Rotor" wird in diesem Zusammenhang absichtlich vermieden, weil es später in Verbindung mit der elektrischen Maschine 2 als solcher benötigt wird.

Gemäß Figur 2 weist die elektrische Maschine 2 ein Statorpaket 4 auf. Das Statorpaket 4 ist gemäß Figur 2 über eine Verbindungsstruktur 5 mit dem Grundkörper 1 verbunden. Die elektrische Maschine 2 weist weiterhin einen Rotor 6 auf. Der Rotor 6 wirkt mit dem Statorpaket 4 elektromagnetisch zusammen. Zwischen dem Statorpaket 4 und dem Rotor 6 bildet sich somit die elektromotorische Kraft aus. Der Rotor 6 ist in (mindestens) einem Lager 6' gelagert, so dass der Rotor 6 um eine Rotationsachse 7 rotierbar ist.

Soweit nachfolgend die Begriffe "axial", "radial" und "tangential" verwendet werden, sind sie stets auf die Rotationsachse 7 bezogen. Axial ist eine Richtung parallel zur Rotationsachse 7. Radial ist eine Richtung orthogonal zur Rotationsachse 7 auf die Rotationsachse 7 zu oder von ihr weg. Tangential ist eine Richtung orthogonal zur Rotationsachse 7 und orthogonal zur Radialrichtung. Tangential ist also eine Richtung, die in konstantem radialem Abstand und bei konstanter Axialposition kreisförmig um die Rotationsachse 7 herum gerichtet ist.

Mittels der Verbindungsstruktur 5 ist das Statorpaket 4 relativ zum Grundkörper 1 fixiert. Das Statorpaket 4 ist also mittels der Verbindungsstruktur 5 relativ zum Grundkörper 1 sowohl radial als auch axial fixiert und darüber hinaus auch gegen Verdrehen um die Rotationsachse 7 herum drehfest fixiert.

Gemäß Figur 2 ist der Rotor 6 als Außenläufer ausgebildet. Auch in den weiteren Figuren wird stets eine Ausgestaltung der elektrischen Maschine 2 erläutert, bei welcher der Rotor 6 als Außenläufer ausgebildet ist. Prinzipiell könnte der Rotor 6 jedoch ebenso als Innenläufer ausgebildet sein. Man müsste lediglich eine Spiegelung an einer fiktiven zylindrischen Spiegelkontur 8 vornehmen. Die Spiegelkontur 8 ist in Figur 2 strichpunktiert eingezeichnet. Es wird darauf hingewiesen, dass die Spiegelkontur 8 eine rein fiktive Kontur ist, also kein real vorhandenes Objekt.

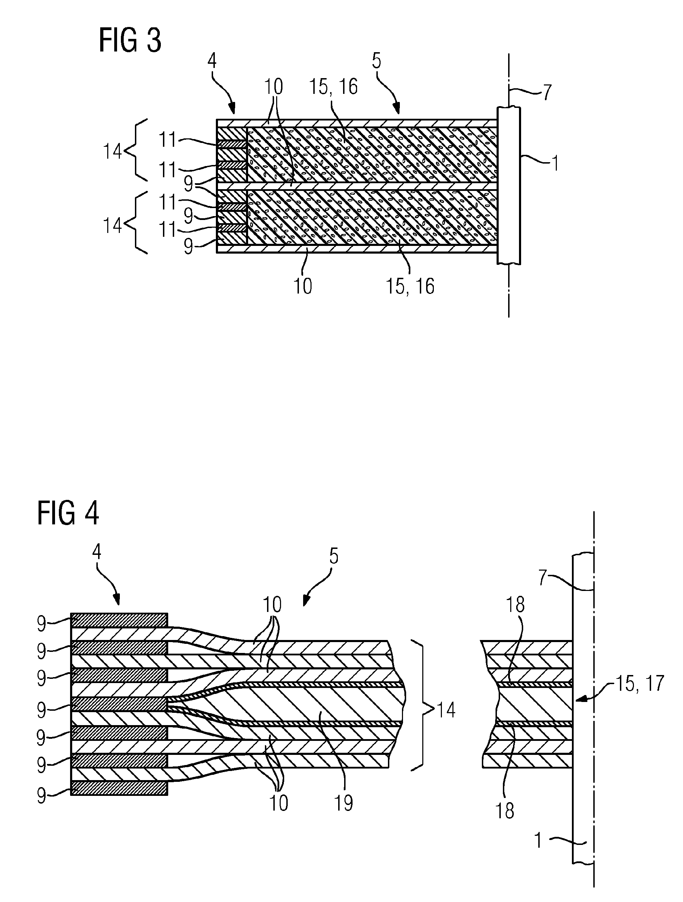

Gemäß den Figuren 3 und 4 weist das Statorpaket 4 eine Anzahl von Statorblechen 9 auf. Die Statorbleche 9 sind in Axialrichtung gesehen aufeinander gestapelt. Gemäß den Figuren 3 und 4 ist zumindest zwischen einigen der Statorbleche 9 jeweils eine erste Zwischenschicht 10 angeordnet. Die ersten Zwischenschichten 10 sind Bestandteile der Verbindungsstruktur 5. Über die ersten Zwischenschichten 10 wird das vom Statorpaket 4 auf den Rotor 6 ausgeübte Drehmoment (d.h. die elektromotorische Kraft) in die Verbindungsstruktur 5 eingeleitet.

Bei der Ausgestaltung gemäß Figur 4 ist zwischen allen Statorblechen 9 jeweils eine erste Zwischenschicht 10 angeordnet. Bei der Ausgestaltung gemäß Figur 3 hingegen ist nur zwischen einigen der Statorbleche 9 jeweils eine erste Zwischenschicht 10 angeordnet. Bei denjenigen Statorblechen 9, zwischen denen bei der Ausgestaltung gemäß Figur 3 keine erste Zwischenschicht 10 angeordnet ist, ist jeweils eine zweite Zwischenschicht 11 angeordnet. Der Unterschied zwischen den ersten Zwischenschichten 10 und den zweiten Zwischenschichten 11 besteht darin, dass die zweiten Zwischenschichten 11 - im Gegensatz zu den ersten Zwischenschichten 10 - keine Bestandteile der Verbindungsstruktur 5 sind. Anders ausgedrückt: Die zweiten Zwischenschichten 11 können - im Querschnitt orthogonal zur Rotationsachse 7 gesehen - eine kleinere Kontur aufweisen als die ersten Zwischenschichten 10. Insbesondere können die zweiten Zwischenschichten 11 den gleichen Zuschnitt aufweisen wie die Statorbleche 9. Die ersten Zwischenschichten 10 müssen sich hingegen über den Zuschnitt der Statorbleche 9 hinaus auf den Grundkörper 1 zu erstrecken.

Die ersten Zwischenschichten 10 bestehen aus einem Material, das elektromagnetisch inaktiv ist. Beispielsweise können die ersten Zwischenschichten 10 aus einem Faserverbundwerkstoff bestehen. Geeignete Faserverbundwerkstoffe sind beispielsweise kohlefaserverstärkte Kunststoffe oder glasfaserverstärkte Kunststoffe. Auch die zweiten Zwischenschichten 11 sind, sofern sie vorhanden sind, elektromagnetisch inaktiv. Sie können - nicht aber müssen - aus dem gleichen Material bestehen wie die ersten Zwischenschichten 10.

Gemäß der Ausgestaltung von Figur 3 folgen in Richtung der Rotationsachse 7 gesehen auf die ersten Zwischenschichten 10 jeweils mehrere zweite Zwischenschichten 11. Diese Ausgestaltung - dass also im Falle des Vorhandenseins der zweiten Zwischenschichten 11 mehr zweite Zwischenschichten 11 vorhanden sind als erste Zwischenschichten 10 - ist bevorzugt, aber nicht zwingend. Die Anzahl an zweiten Zwischenschichten 11, die sich zwischen je zwei ersten Zwischenschichten 10 befinden, kann nach Bedarf bestimmt sein. In der Regel liegt sie zwischen drei und sechs.

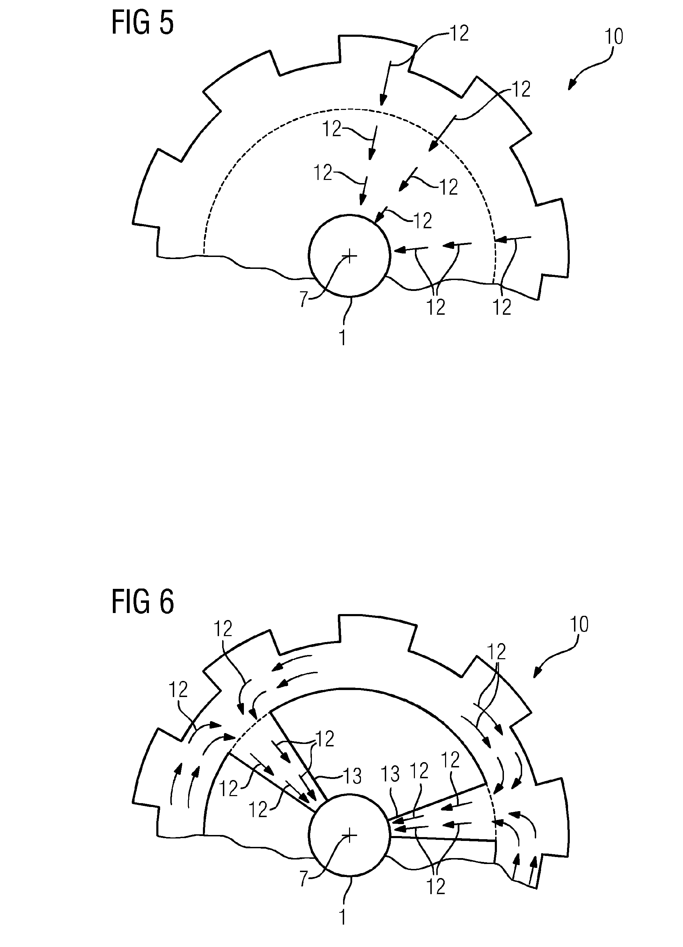

Es ist möglich, dass die ersten Zwischenschichten 10 aus einem Material bestehen, das eine Vorzugswärmeleitrichtung aufweist. Beispielsweise weisen manche kohlefaserverstärkte Kunststoffe eine derartige Eigenschaft auf. Falls die ersten Zwischenschichten 10 aus einem derartigen Material bestehen, ist die Vorzugswärmeleitrichtung vorzugsweise innerhalb des Statorpakets 4 radial oder tangential zur Rotationsachse 7 und außerhalb des Statorpakets 4 vom Statorpaket 4 weg orientiert. Die Figuren 5 und 6 zeigen entsprechende mögliche Ausgestaltungen.

Bei der Ausgestaltung gemäß Figur 5 besteht die erste Zwischenschicht 10 im Wesentlichen aus Vollmaterial. Die erste Zwischenschicht 10 erstreckt sich also, ausgehend von der Kontur der Statorbleche 9 - in Figur 5 gestrichelt eingezeichnet - vollflächig nach radial innen. Bei einer derartigen Ausgestaltung der ersten Zwischenschicht 10 kann die Vorzugswärmeleitrichtung - in Figur 5 durch Pfeile 12 angedeutet - sowohl innerhalb als auch außerhalb des Statorpakets 4 radial orientiert sein.

Bei der Ausgestaltung gemäß Figur 6 hingegen besteht die erste Zwischenschicht 10 nur im Bereich der Statorbleche 9 aus Vollmaterial. Ausgehend von der Kontur der Statorbleche 9 - auch in Figur 6 gestrichelt eingezeichnet - ragen nach radial innen lediglich speichenartige Finger 13 der ersten Zwischenschicht 10, nachfolgend auch als Verbindungsstreben 13 bezeichnet. Die Anzahl an Fingern 13 kann nach Bedarf gewählt sein. Hierauf wird später noch näher eingegangen werden. Bei einer derartigen Ausgestaltung der ersten Zwischenschichten 10 sollte die Vorzugswärmeleitrichtung im Bereich der Verbindungsstreben 13 vom Statorpaket 4 weg orientiert sein, im Bereich des Statorpakets 4 in den Winkelbereichen zwischen den Verbindungsstreben 13 tangential orientiert sein und in den Winkelbereichen der Verbindungsstreben 13 von einer tangentialen Orientierung in eine radiale Orientierung übergehen.

Es ist möglich, dass auf der Verbindungsstruktur 5 wärmeabführende Elemente angeordnet sind. Vorzugsweise ist jedoch die Verbindungsstruktur 5 selbst bereits als Kühleinrichtung für das Statorpaket 4 ausgebildet.

Gemäß den Figuren 3 und 4 weist die Verbindungsstruktur 5 eine Anzahl von Teilstrukturen 14 auf. Jede Teilstruktur 14 weist eine Mittelschicht 15 auf. Die Mittelschichten 15 enthalten keine der ersten Zwischenschichten 10. Die Mittelschichten 15 sind axial auf beiden Seiten jeweils von einer Gruppe von ersten Zwischenschichten 10 begrenzt.

Gemäß Figur 3 bestehen die Mittelschichten 15 aus einem Strukturschaum 16. Gemäß Figur 4 bestehen die Mittelschichten 15 aus einer Sandwichstruktur 17. Die Sandwichstruktur 17 weist ihrerseits 2 Deckschichten 18 und eine Wabenstruktur 19 auf. Die Deckschichten 18 grenzen jeweils an eine der Gruppen von ersten Zwischenschichten 10 an. Gemäß den Figuren 3 und 4 ist die Ausgestaltung der Mittelschichten 15 als Strukturschaum 16 in Verbindung mit dem Vorhandensein der zweiten Zwischenschichten 11 erläutert, die Ausgestaltung der Mittelschichten 15 als Sandwichstruktur 17 in Verbindung mit der Anordnung der ersten Zwischenschichten 10 zwischen allen Statorblechen 9. Dies ist jedoch nicht zwingend. Ebenso könnte der Strukturschaum 16 in Verbindung mit der Anordnung der ersten Zwischenschichten 10 zwischen allen Statorblechen 9 realisiert sein, die Sandwichstruktur 17 in Verbindung mit dem Vorhandensein der zweiten Zwischenschichten 11.

Die Anzahl an ersten Zwischenschichten 10 pro Gruppe erster Zwischenschichten 10 kann nach Bedarf gewählt sein. Sie kann 1 sein (siehe beispielsweise Figur 3) oder größer als 1 sein, beispielsweise zwischen drei und sechs liegen (siehe beispielsweise Figur 4).

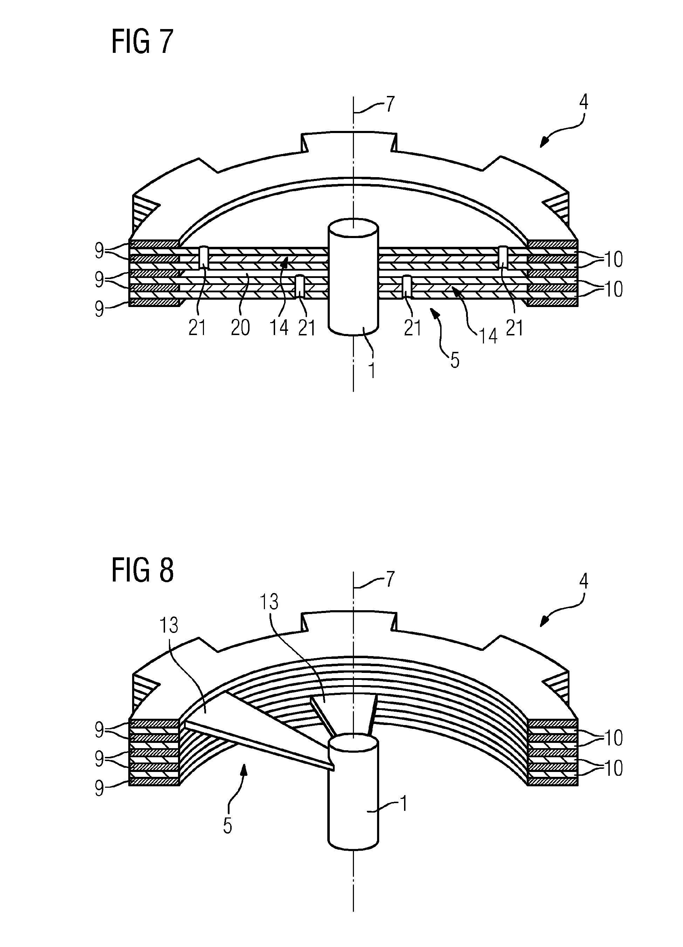

In der Regel sind mehrere Teilstrukturen 14 vorhanden. Es ist möglich, dass die Teilstrukturen 14 in Richtung der Rotationsachse 7 gesehen ineinander übergehen, d.h. dass eine Gruppe von ersten Zwischenschichten 10 gleichzeitig an zwei Mittelschichten 15 angrenzt. Rein beispielhaft ist dies in Figur 3 dargestellt. Alternativ ist es möglich, dass die einander zugewandten Gruppen von ersten Zwischenschichten 10 der Teilstrukturen 14 gemäß Figur 7 in Richtung der Rotationsachse 7 gesehen voneinander beabstandet sind. In diesem Fall begrenzen zwei Teilstrukturen 14, die axial aufeinander folgen, vorzugsweise einen Hohlraum 20 axial beidseitig. Radial wird der Hohlraum 20 in diesem Fall einerseits vom Statorpaket 4 und andererseits vom Grundkörper 1 begrenzt.

In den Teilstrukturen 14 können Durchgangsöffnungen 21 zum Einspeisen eines Kühlmediums in den Hohlraum 20 und zum Ausspeisen des Kühlmediums aus dem Hohlraum 20 angeordnet sein. Das Kühlmedium ist vorzugsweise ein flüssiges Kühlmedium, beispielsweise Wasser. Die Anordnung der Durchgangsöffnungen 21 ist vorzugsweise derart, dass die ersten Zwischenschichten 10 über ihre gesamte Fläche vom Kühlmedium überströmt werden. Beispielsweise können die Durchgangsöffnungen 21 entsprechend der Darstellung in Figur 7 bei der einen Teilstruktur 14 radial innen angeordnet sein, bei der anderen Teilstruktur 14 radial außen. Auch andere Ausgestaltungen sind möglich.

Gemäß einer weiteren Ausgestaltung weist die Verbindungsstruktur 5 gemäß Figur 8 die bereits in Verbindung mit Figur 6 erwähnten speichenartigen Verbindungsstreben 13 auf. Die Verbindungsstreben 13 verbinden das Statorpaket 4 mit dem Grundkörper 1. Die ersten Zwischenschichten 10 sind, wie bereits erwähnt, Bestandteile der Verbindungsstreben 13. Die Verbindungsstreben 13 sind in der Regel flach ausgebildet.

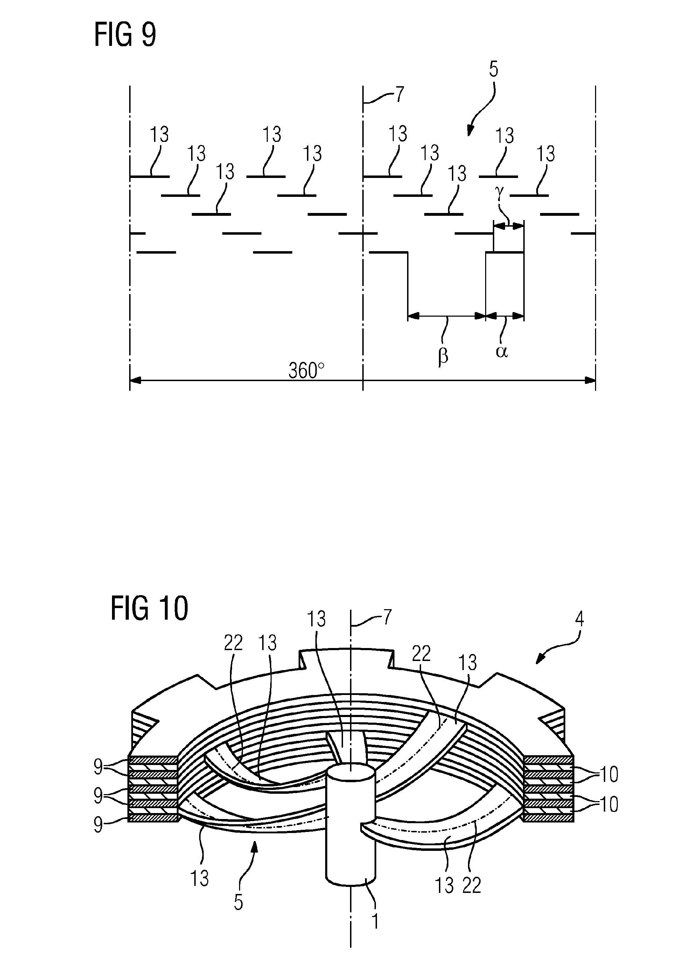

Bei der Ausgestaltung gemäß Figur 8 - siehe ergänzend Figur 9 - überdecken die einzelnen Verbindungsstreben 13 tangential zur Rotationsachse 7 gesehen jeweils einen bestimmten Winkelbereich α, nachfolgend Überdeckungswinkel α genannt. Der Überdeckungswinkel α kann - rein beispielhaft - bei etwa 30° liegen.

Bei der Ausgestaltung gemäß den Figuren 8 und 9 verlaufen die Verbindungsstreben 13 jeweils in einer zur Rotationsachse 7 orthogonalen Radialebene. Pro Radialebene sind in der Regel mehrere Verbindungsstreben 13 vorhanden, beispielsweise entsprechend der Darstellung von Figur 9 jeweils vier Verbindungsstreben 13. Innerhalb der jeweiligen Radialebene sind die Verbindungsstreben 13 in der Regel gleichmäßig verteilt angeordnet. Zwischen den Verbindungsstreben 13 der jeweiligen Radialebene ist daher eine Winkellücke β, gemäß obigem Beispiel von vier Verbindungsstreben 13, die jeweils 30° überdecken, also 60°.

Weiterhin sind die Verbindungsstreben 13 in der Regel in mehreren Radialebenen angeordnet, beispielsweise entsprechend der Darstellung von Figur 9 in fünf Radialebenen. Von Radialebene zu Radialebene sind die Verbindungsstreben 13 gegeneinander um einen Versatzwinkel γ versetzt. Die von den in einer der Radialebenen verlaufenden Verbindungsstreben 13 überdeckten Winkelbereiche α sind also verschieden von den Winkelbereichen α, die von den in mindestens einer anderen Radialebene verlaufenden Verbindungsstreben 13 überdeckt werden.

Der Versatzwinkel γ kann nach Bedarf gewählt sein. Es ist möglich, dass der Versatzwinkel γ (geringfügig) kleiner als der Überdeckungswinkel α ist, beispielsweise bei ca. 25° liegt. Alternativ kann er gleich dem Überdeckungswinkel α oder sogar größer als der Überdeckungswinkel α sein.

Gemäß Figur 8 und auch gemäß Figur 10 erstrecken sich die Verbindungsstreben 13 vom Statorpaket 4 zum Grundkörper 1 in Richtung einer jeweiligen Hauptachse 22. Gemäß Figur 10 sind die Verbindungsstreben 13 um die jeweilige Hauptachse 22 verdreht. Die Verbindungsstreben 13 wirken damit als Luftleitelemente, mittels derer ein Kühlluftstrom, welcher der Verbindungsstruktur 5 axial zugeführt wird, in strömungstechnisch und kühltechnisch günstiger Weise durch die Verbindungsstruktur 5 geführt wird. Die jeweilige Hauptachse 22 kann gemäß Figur 10 auf ihrem Weg vom Statorpaket 4 zum Grundkörper 1 ihre Richtung ändern.

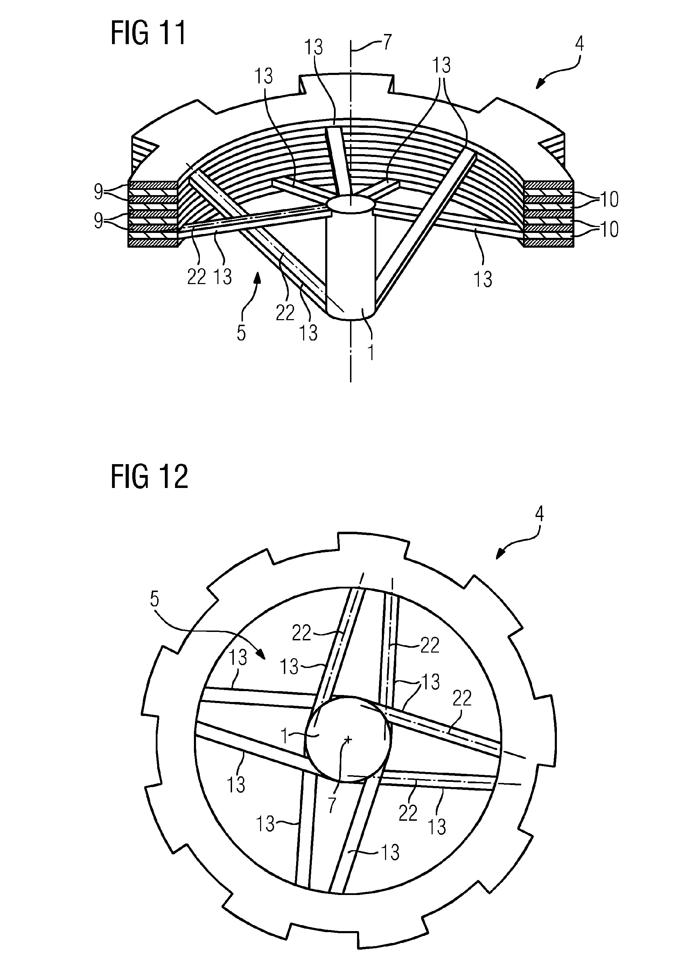

Auch bei der Darstellung gemäß den Figuren 11 und 12 erstrecken sich die Verbindungsstreben 13 vom Statorpaket 4 zum Grundkörper 1 in Richtung ihrer jeweiligen Hauptachse 22. Bei dieser Ausgestaltung ist die jeweilige Hauptachse 22 rein linear. Gemäß den Figuren 11 und 12 weisen die Hauptachsen 22 der Verbindungsstreben 13 jedoch zusätzlich zu einer Komponente radial zur Rotationsachse 7 eine jeweilige Komponente axial zur Rotationsachse 7 auf. Wie besonders deutlich aus Figur 12 erkennbar ist, weisen die Hauptachsen 22 sogar zusätzlich eine jeweilige Komponente tangential zur Rotationsachse 7 auf. Die Hauptachsen 22 sind derart orientiert, dass in dem Fall, dass die Rotationsachse 7 vertikal (lotrecht) orientiert ist, bei einem ersten Teil der Hauptachsen 22 die Hauptachsen 22 auf ihrem Weg vom Statorpaket 4 zum Grundkörper 1 nach oben verlaufen und bei einem zweiten Teil der Hauptachsen 22 Hauptachsen 22 auf ihrem Weg vom Statorpaket 4 zum Grundkörper 1 nach unten verlaufen. In analoger Weise können die Hauptachsen 22 gemäß Figur 12 auch gegenläufige Tangentialkomponenten aufweisen. Falls aufgrund der vorgesehenen Anwendung jedoch vorab bekannt ist, dass der Rotor 6 stets in der selben Drehrichtung dreht, kann es von Vorteil sein, wenn die Hauptachsen 22 gleichläufige Tangentialkomponenten aufweisen. Im Ergebnis wird durch eine derartige Ausgestaltung eine sehr leichte und dennoch sehr stabile Verbindung des Statorpakets 4 mit dem Grundkörper 1 erreicht.

Die vorliegende Erfindung weist viele Vorteile auf. Insbesondere kann durch die Integration von Aktiv- und Passivteilen mittels der ersten Zwischenschichten 10 der Verbindungsstruktur 5 eine relativ einfache, kostengünstige und sehr leichte Lösung für eine elektrische Maschine 2 geschaffen werden, deren Leistungspotenzial im Dauerbetrieb gegenüber einer konventionellen elektrischen Maschine nahezu in vollem Umfang beibehalten werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einrichtung,
- wobei die Einrichtung einen Grundkörper (1) aufweist,
- wobei ein Statorpaket (4) einer elektrischen Maschine (2) über eine Verbindungsstruktur (5) mit dem Grundkörper (1) verbunden ist,
- wobei die elektrische Maschine (2) einen Rotor (6) aufweist, der mit dem Statorpaket (4) elektromagnetisch zusammenwirkt und relativ zum Statorpaket (4) drehbar gelagert ist, so dass der Rotor (6) um eine Rotationsachse (7) rotierbar ist,
- wobei das Statorpaket (4) mittels der Verbindungsstruktur (5) relativ zum Grundkörper (1) fixiert ist,
- wobei das Statorpaket (4) eine Anzahl von Statorblechen (9) aufweist, die in Richtung der Rotationsachse (7) gesehen aufeinander gestapelt sind,
- wobei zumindest zwischen einigen der Statorbleche (9) elektromagnetisch inaktive erste Zwischenschichten (10) angeordnet sind,
- wobei die ersten Zwischenschichten (10) Bestandteile der Verbindungsstruktur (5) sind und
- wobei über die ersten Zwischenschichten (10) ein vom Statorpaket (4) auf den Rotor (6) ausgeübtes Drehmoment in die Verbindungsstruktur (5) eingeleitet wird.

2. Einrichtung nach Anspruch 1,
**dadurch gekennzeichnet,**
**dass** zwischen allen Statorblechen (9) jeweils eine erste Zwischenschicht (10) angeordnet ist.

3. Einrichtung nach Anspruch 1,
**dadurch gekennzeichnet,**
**dass** zwischen denjenigen Statorblechen (9), zwischen denen keine erste Zwischenschicht (10) angeordnet ist, elektromagnetisch inaktive zweite Zwischenschichten (11) angeordnet sind und dass die zweiten Zwischenschichten (11) nicht Bestandteil der Verbindungsstruktur (5) sind.

4. Einrichtung nach Anspruch 3,
**dadurch gekennzeichnet,**
**dass** in Richtung der Rotationsachse (7) gesehen auf die ersten Zwischenschichten (10) jeweils mehrere zweite Zwischenschichten (11) folgen.

5. Einrichtung nach einem der obigen Ansprüche,
**dadurch gekennzeichnet,**
**dass** die ersten Zwischenschichten (10) aus einem Faserverbundwerkstoff bestehen.

6. Einrichtung nach einem der obigen Ansprüche,
**dadurch gekennzeichnet,**
**dass** die ersten Zwischenschichten (10) aus einem Material bestehen, das eine Vorzugswärmeleitrichtung aufweist, dass die Vorzugswärmeleitrichtung innerhalb des Statorpakets (4) radial oder tangential zur Rotationsachse (7) und außerhalb des Statorpakets (4) vom Statorpaket (4) weg orientiert ist.

7. Einrichtung nach einem der obigen Ansprüche,
**dadurch gekennzeichnet,**
**dass** auf der Verbindungsstruktur (5) wärmeabführende Elemente angeordnet sind.

8. Einrichtung nach einem der obigen Ansprüche,
**dadurch gekennzeichnet,**
**dass** die Verbindungsstruktur (5) eine Anzahl von Teilstrukturen (14) aufweist, dass die Teilstrukturen (14) jeweils eine Mittelschicht (15) aufweisen, die keine der ersten Zwischenschichten (10) enthält, und dass die Mittelschichten (15) in Richtung der Rotationsachse (7) gesehen auf beiden Seiten jeweils von einer Gruppe von ersten Zwischenschichten (10) begrenzt sind.

9. Einrichtung nach Anspruch 8,
**dadurch gekennzeichnet,**
**dass** die Mittelschichten (15) aus einem Strukturschaum (16) oder einer Sandwichstruktur (17) bestehen, wobei die Sandwichstruktur (17) zwei Deckschichten (18) und eine zwischen den Deckschichten (18) angeordnete Wabenstruktur (19) aufweist.

10. Einrichtung nach Anspruch 8 oder 9,
**dadurch gekennzeichnet,**
**dass** die Verbindungsstruktur (5) mindestens zwei Teilstrukturen (14) aufweist, dass die einander zugewandten Gruppen von ersten Zwischenschichten (10) der Teilstrukturen (14) in Richtung der Rotationsachse (7) gesehen voneinander beabstandet sind, dass die zwei Teilstrukturen (14) einen Hohlraum (20) axial beidseitig begrenzen und dass in den Teilstrukturen (14) Durchgangsöffnungen (21) zum Einspeisen eines Kühlmediums in den Hohlraum (20) und zum Ausspeisen des Kühlmediums aus dem Hohlraum (20) angeordnet sind.

11. Einrichtung nach einem der obigen Ansprüche,
**dadurch gekennzeichnet,**
**dass** die Verbindungsstruktur (5) eine Anzahl speichenartiger Verbindungsstreben (13) aufweist, dass die Verbindungsstreben (13) das Statorpaket (4) mit dem Grundkörper (1) verbinden und dass die ersten Zwischenschichten (10) Bestandteile der Verbindungsstreben (13) sind.

12. Einrichtung nach Anspruch 11,
**dadurch gekennzeichnet,**
**dass** die Verbindungsstreben (13) flach ausgebildet sind.

13. Einrichtung nach Anspruch 12,
**dadurch gekennzeichnet,**
**dass** die Verbindungsstreben (13) sich vom Statorpaket (4) zum Grundkörper (1) in Richtung einer jeweiligen Hauptachse (20) erstrecken und dass die Verbindungsstreben (13) um die jeweilige Hauptachse (22) verdreht sind.

14. Einrichtung nach Anspruch 12,
**dadurch gekennzeichnet,**
**dass** die Verbindungsstreben (13) jeweils in einer zur Rotationsachse (7) orthogonalen Radialebene verlaufen, dass die Verbindungsstreben (13) um die Rotationsachse (7) herum gesehen einen jeweiligen Winkelbereich (α) überdecken, dass pro Radialebene die in der jeweiligen Radialebene verlaufenden Verbindungsstreben (13) um die Rotationsachse (7) herum gesehen nur einen Teil eines Vollkreises überdecken und dass bezüglich mindestens zweier Radialebenen die von den in der jeweiligen Radialebene verlaufenden Verbindungsstreben (13) überdeckten Winkelbereiche (α) voneinander verschieden sind.

15. Einrichtung nach Anspruch 11 oder 12,
**dadurch gekennzeichnet,**
**dass** die Verbindungsstreben (13) sich vom Statorpaket (4) zum Grundkörper (1) in Richtung einer jeweiligen Hauptachse (22) erstrecken und dass die jeweilige Hauptachse (22) zusätzlich zu einer Komponente radial zur Rotationsachse (7) eine jeweilige Komponente axial zur Rotationsachse (7) aufweist.

16. Einrichtung nach Anspruch 15,
**dadurch gekennzeichnet,**
**dass** die jeweilige Hauptachse (22) zusätzlich eine jeweilige Komponente tangential zur Rotationsachse (7) aufweist.

17. Einrichtung nach einem der obigen Ansprüche,
**dadurch gekennzeichnet,**
**dass** der Rotor (6) als Außenläufer ausgebildet ist.

18. Einrichtung nach einem der obigen Ansprüche,
**dadurch gekennzeichnet,**
**dass** der Grundkörper (1) Bestandteil eines Luftfahrzeugs ist, insbesondere eines Hubschraubers.
